(19) **Europäisches Patentamt**
**European Patent Office**
**Office européen des brevets**

(11) **EP 3 471 174 A1**

(12) **EUROPEAN PATENT APPLICATION**
published in accordance with Art. 153(4) EPC

(43) Date of publication:
17.04.2019 Bulletin 2019/16

(51) Int Cl.:
$H01M\ 4/133^{(2010.01)}$ $\quad H01M\ 4/36^{(2006.01)}$
$H01M\ 4/485^{(2010.01)}$ $\quad H01M\ 4/587^{(2010.01)}$
$H01M\ 4/62^{(2006.01)}$

(21) Application number: 17810259.6

(22) Date of filing: 05.06.2017

(86) International application number:
PCT/JP2017/020822

(87) International publication number:
WO 2017/213083 (14.12.2017 Gazette 2017/50)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 08.06.2016 JP 2016114404

(71) Applicant: **Showa Denko K.K.**
**Tokyo 105-8518 (JP)**

(72) Inventors:
• **INOSE Tsuyoshi**
**Tokyo 105-8518 (JP)**
• **TAKEUCHI Masataka**
**Tokyo 105-8518 (JP)**
• **SOTOWA Chiaki**
**Tokyo 105-8518 (JP)**

(74) Representative: **Strehl Schübel-Hopf & Partner**
**Maximilianstrasse 54**
**80538 München (DE)**

(54) **NEGATIVE ELECTRODE FOR LITHIUM ION SECONDARY CELL, AND LITHIUM ION SECONDARY CELL**

(57)    The present invention relates to a negative electrode for a lithium ion secondary battery, including: a current collector; and a negative electrode active material layer including a negative electrode active material, a conductive assistant, and a binder,
wherein the negative electrode active material includes: artificial graphite having a 50% particle diameter $D_{50}$ in a cumulative particle size distribution on a volume basis of from 1 $\mu$m to 9 $\mu$m; and lithium titanate having a 50% particle diameter $D_{50}$ in a cumulative particle size distribution on a volume basis of from 1 $\mu$m to 9 $\mu$m, and wherein the negative electrode active material has a ratio of the lithium titanate in a total mass of the artificial graphite and the lithium titanate of from 10.0 mass% to 20.0 mass%. The negative electrode and the lithium ion secondary battery using the same exhibit excellent properties even under a low temperature environment.

EP 3 471 174 A1

**Description**

Technical Field

The present invention relates to a negative electrode for a lithium ion secondary battery and a lithium ion secondary battery including the negative electrode. More specifically, the present invention relates to a negative electrode and a lithium ion secondary battery exhibiting excellent characteristics even under a low-temperature environment.

Background Art

In recent years, lithium ion secondary batteries have been used as powder sources for power tools and electric vehicles, in addition to as powder sources for portable electronic devices. In the electric vehicles, such as a battery electric vehicle (BEV) and a hybrid electric vehicle (HEV), it has been required that the lithium ion secondary battery maintains high charge/discharge cycle characteristics over 10 years, has sufficiently large current load characteristics in order to drive a high-power motor, and has a high volume energy density in order to extend a driving range. In addition, the characteristics of the battery under a low-temperature environment are important because of outside use in a cold region or in winter.

A graphite material has been widely utilized as a negative electrode active material of the lithium ion secondary battery. A lithium ion is intercalated and deintercalated between graphite crystal layers to perform charge/discharge, and hence the graphite material has advantages in that generation of needle-shaped metal lithium is suppressed, and also a change in volume in association with charge/discharge is small.

However, there is a problem in that, under the low-temperature environment, lithium ion acceptability of a corresponding negative electrode is reduced, and lithium is precipitated on the negative electrode. In addition, there is another problem in that, under the low-temperature environment, charge characteristics of the lithium ion secondary battery are reduced, and a sufficient battery capacity is not obtained.

In Patent Literature 1, there is a proposal of a lithium secondary battery, including negative electrode active material layers using negative electrode active materials having different reaction starting voltages with lithium formed on a negative electrode current collector, in which: a first negative electrode active material layer including a first negative electrode active material having the highest reaction starting voltage with lithium is formed on part of the negative electrode current collector; and a second negative electrode active material layer including a second negative electrode active material having a lower reaction starting voltage with lithium than the first negative electrode active material is laminated on the first negative electrode active material layer and formed on part of the negative electrode current collector in which the first negative electrode active material layer is not formed. It is described that, with the above-mentioned configuration, lithium ion acceptability of a negative electrode of the lithium secondary battery at low temperature is improved, and lithium is prevented from being precipitated on the negative electrode. In addition, it is also described that charge/discharge characteristics at low temperature are improved, and a sufficient battery capacity is obtained even under a low-temperature environment.

Patent Literature 2 discloses a lithium ion secondary battery using a negative electrode active material obtained by mixing natural graphite into $Li_4Ti_5O_{12}$. In this battery, a negative electrode potential hovers at a plateau potential of $Li_4Ti_5O_{12}$ (1.5 V) at the time of charging, and the negative electrode potential is reduced to 0.1 V at a time point when intercalation of lithium shifts from $Li_4Ti_5O_{12}$ to natural graphite. Its use method involving regarding this time point as an end point of charging, and controlling stop of charging based on the negative electrode potential has been reported.

In Patent Literature 3, as a method of improving input characteristics of a non-aqueous electrolyte secondary battery under a low-temperature environment, there has been a report of an electrode for a non-aqueous electrolyte secondary battery, including an active material layer containing at least one kind of first active material which intercalates and deintercalates a lithium ion at a first potential and further containing at least one kind of second active material which intercalates and deintercalates a lithium ion at a two-stage operation voltage of a voltage region identical to the first potential and a second potential higher than the voltage region, in which a difference between the first potential and the second potential is 0.2 V or more, and a ratio between an electrochemical capacity of the second active material in the voltage region identical to the first potential and an electrochemical capacity of the second active material at the second potential higher than the voltage region is 3.3 or less.

In Patent Literature 4, as a method of improving output characteristics of a lithium secondary battery at low temperature, there has been a report of, for example, a method involving adding a lithium metal oxide or a lithium metal sulfide to a negative electrode mixture, to thereby obtain high output characteristics not only at normal temperature but also at low temperature.

Citation List

Patent Literature

[PTL 1] JP 2010-020912 A
[PTL 2] JP 2000-348725 A
[PTL 3] JP 2015-046218 A
[PTL 4] JP 2013-058495 A (US 2010/0015524 A1)

Summary of Invention

Problem to be Solved by Invention

An object of the present invention is to provide a lithium ion secondary battery exhibiting excellent characteristics even under a low-temperature environment.

Means to Solve Problems

According to embodiments of the present invention, there are provided a negative electrode for a lithium ion secondary battery and a lithium ion secondary battery described below.

[1] A negative electrode for a lithium ion secondary battery, including:

a current collector; and a negative electrode active material layer including a negative electrode active material, a conductive assistant, and a binder,
wherein the negative electrode active material includes: artificial graphite having a 50% particle diameter $D_{50}$ in a cumulative particle size distribution on a volume basis of from 1 $\mu$m to 9 $\mu$m; and lithium titanate having a 50% particle diameter $D_{50}$ in a cumulative particle size distribution on a volume basis of from 1 $\mu$m to 9 $\mu$m, and wherein the negative electrode active material has a ratio of the lithium titanate in a total mass of the artificial graphite and the lithium titanate of from 10.0 mass% to 20.0 mass%.

[2] The negative electrode for a lithium ion secondary battery according to [1] above, wherein an amount of the conductive assistant is from 1.0 part by mass to 2.0 parts by mass with respect to 100 parts by mass of a total of the artificial graphite and the lithium titanate.
[3] The negative electrode for a lithium ion secondary battery according to [2] above, wherein an amount of the binder is from 3.0 parts by mass to 6.0 parts by mass with respect to 100 parts by mass of a total of the artificial graphite, the lithium titanate, and the conductive assistant.
[4] The negative electrode for a lithium ion secondary battery according to any one of [1] to [3] above, wherein the artificial graphite has an average interlayer spacing $d_{002}$ of a (002) plane determined by X-ray diffractometry of from 0.3360 nm to 0.3370 nm.
[5] The negative electrode for a lithium ion secondary battery according to any one of [1] to [4] above, wherein the artificial graphite includes particles each including an artificial graphite core particle and a carbon coating layer formed on a surface of the artificial graphite core particle.
[6] The negative electrode for a lithium ion secondary battery according to any one of [1] to [5] above, wherein the artificial graphite has an intensity ratio $I_D/I_G$ (R value) between a peak intensity $I_D$ in a region of from 1,300 cm$^{-1}$ to 1,400 cm$^{-1}$ in a spectrum measured by Raman spectroscopy and a peak intensity $I_G$ in a region of from 1,580 cm$^{-1}$ to 1,620 cm$^{-1}$ in the spectrum of from 0.10 to 0.25.
[7] The negative electrode for a lithium ion secondary battery according to any one of [1] to [6] above, wherein the artificial graphite has a BET specific surface area of from 1.0 m$^2$/g to 7.0 m$^2$/g.
[8] The negative electrode for a lithium ion secondary battery according to any one of [1] to [7] above, wherein the conductive assistant includes at least one kind selected from the group consisting of carbon black, a vapor grown carbon fiber, and a carbon nanotube.
[9] A lithium ion secondary battery, comprising the negative electrode for a lithium ion secondary battery of any one of [1] to [8] above.

Advantageous Effects of Invention

In the lithium ion secondary battery of the present invention, the negative electrode is improved in lithium ion acceptability at low temperature, and hence lithium is prevented from being precipitated on the negative electrode. Besides, the lithium ion secondary battery is improved in charge/discharge characteristics under a low-temperature environment. In addition, characteristics at high temperature are not sacrificed, and hence a sufficient battery capacity can be obtained under the low-temperature environment to a high-temperature environment.

The negative electrode for a lithium ion secondary battery of the present invention can be produced through conventional production steps for the negative electrode without adding a new step thereto.

Description of Embodiments

An embodiment of the present invention is described in detail below.

A numerical range represented through use of "to" as used herein means a range including numerals before and after the "to" as a lower limit value and an upper limit value, respectively.

(1) Negative Electrode Active Material

A negative electrode active material to be used in a negative electrode for a lithium ion secondary battery in a preferred embodiment of the present invention includes artificial graphite and lithium titanate.

The "artificial graphite" as used herein refers to graphite widely produced by an artificial method and a graphite material having a near-perfect graphite crystal. A typical example thereof is one obtained by using, as a raw material, tar or coke obtained from a residue from dry distillation of coal or distillation of a crude oil, and subjecting the tar or the coke to a firing step at from 500°C to 1,000°C and a graphitization step at 2,000°C or more. In addition, kish graphite, which is obtained by re-precipitating carbon from molten iron, is one kind of artificial graphite.

The artificial graphite has a 50% particle diameter $D_{50}$ in a cumulative particle size distribution on a volume basis of from 1 $\mu$m to 9 $\mu$m, preferably from 3 $\mu$m to 9 $\mu$m, more preferably from 5 $\mu$m to 8 $\mu$m. When the artificial graphite has a $D_{50}$ of less than 1 $\mu$m, there are problems in that, for example, a lifetime of a slurry is shortened, and aggregation occurs. In addition, when the artificial graphite has a $D_{50}$ of more than 9 $\mu$m, the slurry has enough stability, but sufficient rate characteristics are not obtained.

The artificial graphite preferably has an interlayer spacing $d_{002}$ of a (002) plane of a graphite crystal measured by powder X-ray diffractometry of from 0.3360 nm to 0.3370 nm. When the artificial graphite has a $d_{002}$ falling within the above-mentioned range, the artificial graphite is less liable to be oriented in use as an electrode, and satisfactory Li ion acceptability is obtained.

The artificial graphite preferably has an intensity ratio $I_D/I_G$ (R value) between a peak intensity $I_D$ in a region of from 1,300 cm$^{-1}$ to 1,400 cm$^{-1}$ in a spectrum obtained by laser Raman spectroscopy and a peak intensity $I_G$ in a region of from 1,580 cm$^{-1}$ to 1,620 cm$^{-1}$ in the spectrum of from 0.10 to 0.25.

The artificial graphite has a BET specific surface area of preferably from 1.0 m$^2$/g to 7.0 m$^2$/g, more preferably from 2.0 m$^2$/g to 7.0 m$^2$/g. When the artificial graphite has a BET specific surface area falling within the above-mentioned range, the slurry has satisfactory handling properties, and a problem, such as a reduction in peeling strength, is less liable to occur.

In addition, the artificial graphite may be used in the following form: particles of the artificial graphite each serving as a core are each coated with another carbon material. Particularly when the surfaces of artificial graphite core particles are each coated with low crystalline carbon, an excessive increase in BET specific surface area at the time of pulverization is prevented, and a reaction with an electrolytic solution is suppressed. In addition, Li ion acceptability at low temperature is improved (IR drop is reduced).

The lithium titanate has a 50% particle diameter $D_{50}$ in a cumulative particle size distribution on a volume basis of from 1 $\mu$m to 9 $\mu$m, preferably from 2 $\mu$m to 7 $\mu$m. When the lithium titanate has an excessively small $D_{50}$, there are problems in that, for example, the lifetime of the slurry is shortened, and aggregation occurs. In addition, when the lithium titanate has a $D_{50}$ of more than 9 $\mu$m, the slurry has enough stability, but sufficient rate characteristics are not obtained.

As a structure of the lithium titanate, $Li_4Ti_5O_{12}$ and $Li_2Ti_3O_7$ are preferred.

The lithium titanate has a feature of having a small change in volume in association with charge/discharge, and being capable of maintaining a structure of the negative electrode.

In a preferred embodiment of the present invention, the ratio of the lithium titanate in the total mass of the artificial graphite and the lithium titanate is from 10.0 mass% to 20.0 mass%, preferably from 15.0 mass% to 20.0 mass%. When the ratio of the lithium titanate is less than 10.0 mass%, sufficient rate characteristics at low temperature are not obtained. When the ratio of the lithium titanate is more than 20.0 mass%, a cell voltage is reduced, and a reduction in capacity is increased.

The negative electrode active material in a preferred embodiment of the present invention may include any known negative electrode active material other than the artificial graphite and lithium titanate described above. Any kind and amount of the other negative electrode active material are acceptable unless the effects of the present invention are significantly impaired. For example, the content of the other negative electrode active material is preferably 20 mass% or less, more preferably 10 mass% or less with respect to the whole of the negative electrode active material.

(2) Conductive assistant

There is no particular limitation to the conductive assistant to be used in the negative electrode for a lithium ion secondary battery in a preferred embodiment of the present invention. For example, carbon black, carbon fiber, vapor-grown carbon fiber, carbon nanotube and the like can be used alone or in combination thereof. By using a conductive assistant, conductivity of the negative electrode is improved and the battery life is increased. Among the conductive assistants, vapor-grown carbon fiber is preferred from the viewpoint of high crystallinity and high heat conductivity.

As carbon black, for example, acetylene black, furnace black and Ketjenblack, and the like can be used.

Vapor-grown carbon fiber is, for example, produced by: using an organic compound as a raw material; introducing an organic transition metal compound as a catalyst into a high-temperature reaction furnace with a carrier gas to form fiber; and then conducting heat treatment (see, for example, JP 60-54998 A and JP 2778434 B2). The vapor-grown carbon fiber has a fiber diameter of 2 to 1,000 nm, preferably 10 to 500 nm, and has an aspect ratio of preferably 10 to 15,000.

Examples of the organic compound serving as a raw material for vapor-grown carbon fiber include gas of toluene, benzene, naphthalene, ethylene, acetylene, ethane, natural gas, carbon monoxide or the like, and a mixture thereof. Of those, an aromatic hydrocarbon such as toluene or benzene is preferred.

The organic transition metal compound includes a transition metal serving as a catalyst. Examples of the transition metal include metals of Groups IVa, Va, VIa, VIIa, and VIII of the periodic table. Preferred examples of the organic transition metal compound include compounds such as ferrocene and nickelocene.

The carbon fiber may be obtained by pulverizing or disintegrating long fiber obtained by vapor deposition or the like. Further, the carbon fiber may be agglomerated in a flock-like manner.

Carbon fiber which has no pyrolyzate derived from an organic compound or the like adhering to the surface thereof or carbon fiber which has a carbon structure with high crystallinity is preferred.

The carbon fiber with no pyrolyzate adhering thereto or the carbon fiber having a carbon structure with high crystallinity can be obtained, for example, by firing (heat-treating) carbon fiber, preferably, vapor-grown carbon fiber in an inactive gas atmosphere. Specifically, the carbon fiber with no pyrolyzate adhering thereto is obtained by heat treatment in inactive gas such as argon at about 800°C to 1,500°C. Further, the carbon fiber having a carbon structure with high crystallinity is obtained by heat treatment in inactive gas such as argon preferably at 2,000°C or more, more preferably 2,000°C to 3,000°C.

It is preferred that the carbon fiber contains branched fiber. Further, the fiber as a whole may have a portion having hollow structures communicated with each other. For this reason, carbon layers forming a cylindrical portion of the fiber are formed continuously. The hollow structure refers to a structure in which a carbon layer is rolled up in a cylindrical shape and includes an incomplete cylindrical structure, a structure having a partially cut part, two stacked carbon layers connected into one layer, and the like. Further, the cross-section is not limited to a complete circular shape, and the cross-section of the cylinder includes an oval or a polygonal shape.

Further, the average interplanar spacing of a (002) plane by the X-ray diffraction method, d002, of the carbon fiber is preferably 0.344 nm or less, more preferably 0.339 nm or less, particularly preferably 0.338 nm or less. Further, it is preferred that a thickness in a C-axis direction of crystallite, Lc, is 40 nm or less.

Carbon nanotubes having a structure as described below can be used: a tubular structure in which graphene sheets comprising carbon six membered rings are rolled in parallel to the fiber axis, a platelet structure in which graphene sheets comprising carbon six membered rings are perpendicularly arranged to the fiber axis or a herringbone structure in which graphene sheets comprising carbon six membered rings are rolled with an oblique angle to the fiber axis.

The amount of the conductive assistant is preferably 1.0 to 2.0 parts by mass, more preferably 1.0 to 1.6 parts by mass with respect to 100 parts by mass of the total of artificial graphite and lithium titanate.

(3) Binder

In a preferred embodiment of the present invention, examples of the binder include polyethylene, polypropylene, an ethylene-propylene terpolymer, a butadiene rubber, a styrenebutadiene rubber, a butyl rubber, and a polymer compound having a large ion conductivity. Examples of the polymer compound having a large ion conductivity include polyvinylidene fluoride, polyethylene oxide, polyepichlorhydrin, polyphosphazene, and polyacrylonitrile.

The amount of the binder to be used in the paste is preferably 3.0 to 6.0 parts by mass, more preferably 3.0 to 4.0 parts by mass with respect to 100 parts by mass of the total of artificial graphite, lithium titanate and the conductive assistant.

(4) Negative electrode for lithium-ion battery

A paste for a negative electrode is obtained by adding a solvent to the above-mentioned negative electrode active substance, a conductive assistant, a binder and the like, followed by kneading. A negative-electrode active material layer is formed by applying the paste for a negative electrode onto a current collector, followed by drying and press forming, to serve as a negative electrode for use in a lithium ion secondary battery.

In a preferred embodiment of the present invention, only one negative-electrode active material layer needs to be provided on a current collector. That is, it is not necessary to provide multiple layers comprising negative-electrode active material on a current collector. This enables production of a lithium ion secondary battery having excellent property in a low-temperature environment without adding a new process to the conventional production process.

There is no particular limitation to the solvent for obtaining the paste, and examples thereof include N-methyl-2-pyrrolidone, dimethylformamide, isopropanol, and water. In the case of a solvent using water as the solvent, a thickener is preferably used in combination. The amount of the solvent is adjusted so as to give a viscosity which allows easy application of the paste onto a current collector.

Examples of the current collector include a nickel foil, a copper foil, a nickel mesh, and a copper mesh. An application method for the paste is not particularly limited. The thickness of the applied paste is generally from 50 $\mu$m to 200 $\mu$m. When the thickness of the applied paste becomes too large, the negative electrode sheet cannot be housed in a standard battery case or the internal resistance of a battery may increase due to the increase in the diffusion length of lithium ions.

As a drying process of the electrode, it is desirable to dry the electrode after applying the paste at 70 to 90°C using a hot plate, and then to dry the electrode at 70 to 90°C for about 12 hours using a vacuum dryer. If drying is insufficient, a solvent remains in the electrode, leading to the characteristics deterioration such as decrease in the capacity.

As a press forming method, there are given, for example, a roll press forming method and a press forming method. A pressure in the press forming is preferably from about 100 MPa to about 300 MPa (1 ton/cm$^2$ to 3 ton/cm$^2$). A thus-obtained negative electrode is suitable for a lithium ion secondary battery.

The electrode density of the electrode after the press forming is preferably 1.1 to 1.6 g/cm$^3$. When the electrode density is less than 1.1 g/cm$^3$, the battery is to have a low volume energy density. On the other hand, when the electrode density is more than 1.6 g/cm$^3$, it reduces voids in the electrode and inhibits penetration of the electrolyte. In addition, it causes a problem that diffusion of lithium ions is inhibited and the charge and discharge characteristic of a battery is reduced.

(5) Lithium ion secondary battery

By employing the above-described electrode as a constituent, a lithium ion secondary battery can be manufactured.

In the positive electrode of the lithium ion secondary battery, a transition metal oxide containing lithium is generally used as a positive electrode active material, and preferably, an oxide mainly containing lithium and at least one kind of transition metal element selected from the group consisting of Ti, V, Cr, Mn, Fe, Co, Ni, Mo, and W, which is a compound having a molar ratio of lithium to a transition metal element of 0.3 to 2.2, is used. More preferably, an oxide mainly containing lithium and at least one kind of transition metal element selected from the group consisting of V, Cr, Mn, Fe, Co and Ni, which is a compound having a molar ratio of lithium to a transition metal element of 0.3 to 2.2, is used.

It should be noted that Al, Ga, In, Ge, Sn, Pb, Sb, Bi, Si, P, B, and the like may be contained in a range of less than 30% by mole with respect to the mainly present transition metal. Of the above-mentioned positive electrode active materials, it is preferred that at least one kind of material represented by a general formula $Li_xMO_2$ (M represents at least one kind of Co, Ni, Fe, and Mn, and x is 0.02 to 1.2), or material having a structure represented by a general formula $Li_yN_2O_4$ (N contains at least Mn, and y is 0 to 2) be used.

Further, as the positive electrode active material, there may be particularly preferably used at least one kind of materials each including $Li_yM_aD_{1-a}O_2$ (M represents at least one kind of Co, Ni, Fe, and Mn, D represents at least one kind of Co, Ni, Fe, Mn, Al, Zn, Cu, Mo, Ag, W, Ga, In, Sn, Pb, Sb, Sr, B, and P with the proviso that the element corresponding to M being excluded, y=0 to 1.2, and a=0.5 to 1) or materials each having a spinel structure represented by $Li_z(N_bE_{1-b})_2O_4$ (N represents Mn, E represents at least one kind of Co, Ni, Fe, Mn, Al, Zn, Cu, Mo, Ag, W, Ga, In, Sn, Pb, Sb, Sr, B and P, b=1 to 0.2, and z=0 to 2).

Specifically, there are exemplified $Li_xCoO_2$, $Li_xNiO_2$, $Li_xMnO_2$, $Li_xCo_aNi_{1-a}O_2$, $Li_xCO_bV_{1-b}O_2$, $Li_xCO_bFe_{1-b}O_2$, $Li_xMn_2O_4$, $Li_xMn_cCO_{2-c}O_4$, $Li_xMn_cNi_{2-c}O_4$, $Li_xMn_cV_{2-c}O_4$, and $Li_xMn_cFe_{2-c}O_4$ (where, x=0.02 to 1.2, a=0.1 to 0.9, b=0.8 to 0.98, c=1.6 to 1.96, and z=2.01 to 2.3). As the most preferred transition metal oxide containing lithium, there are given $Li_xCoO_2$, $Li_xNiO_2$, $Li_xMnO_2$, $Li_xCo_aNi_{1-a}O_2$, $Li_xMn_2O_4$, and $Li_xCO_bV_{1-b}O_z$ (x=0.02 to 1.2, a=0.1 to 0.9, b=0.9 to 0.98, and z=2.01 to 2.3). It should be noted that the value of x is a value before starting charge and discharge, and the value increases and decreases in accordance with charge and discharge.

Although 50% particle diameter $D_{50}$ in a cumulative particle size distribution on a volume basis of the positive electrode active material is not particularly limited, the diameter is preferably 0.1 to 50 $\mu$m. It is preferred that the volume occupied by the particle group having a particle diameter of 0.5 to 30 $\mu$m be 95% or more of the total volume. It is more preferred that the volume occupied by the particle group having a particle diameter of 3 $\mu$m or less be 18% or less of the total volume, and the volume occupied by the particle group having a particle diameter of 15 $\mu$m to 25 $\mu$m be 18% or less of the total volume.

Although the specific area of the positive electrode active material is not particularly limited, the area is preferably 0.01 to 50 $m^2/g$, particularly preferably 0.2 $m^2/g$ to 10 $m^2/g$ by a BET method. Further, it is preferred that the pH of a supernatant obtained when 5 g of the positive electrode active material is dissolved in 100 ml of distilled water be 7 to 12.

The non-aqueous electrolytic solution and the non-aqueous polymer electrolyte to be used in the lithium ion secondary battery are not particularly limited. Examples thereof include: an organic electrolytic solution obtained by dissolving a lithium salt, such as $LiClO_4$, $LiPF_6$, $LiAsF_6$, $LiBF_4$, $LiSO_3CF_3$, $CH_3SO_3Li$, or $CF_3SO_3Li$, into a non-aqueous solvent, such as ethylene carbonate, diethyl carbonate, dimethyl carbonate, ethyl methyl carbonate, diethyl carbonate, propylene carbonate, butylene carbonate, acetonitrile, propionitrile, dimethoxyethane, tetrahydrofuran, or γ-butyrolactone; a solid or gel-like polymer electrolyte.

In addition, it is desirable to add a substance which causes a decomposition reaction at the time of initial charge of the lithium ion secondary battery in a small amount to the electrolytic solution. Examples of such substance include vinylene carbonate, biphenyl, and propanesultone. The addition amount is preferably from 0.1 mass% to 5.0 mass%.

In a lithium ion secondary battery of the present invention, a separator may be provided between a positive electrode and a negative electrode. Examples of the separator include non-woven fabric, cloth, and a microporous film each mainly containing polyolefin such as polyethylene and polypropylene, a combination thereof, and the like.

In the present invention, a 50% particle diameter $D_{50}$ in a cumulative particle size distribution on a volume basis represents a median diameter and indicates an apparent diameter of the particles. $D_{50}$ is measured by a laser-diffractometry particle size distribution analyzer. As a laser diffraction type particle size distribution analyzer, for example, Mastersizer (registered trademark) produced by Malvern Instruments Ltd. or the like can be used.

In the present description, the BET specific surface area is measured by a common method of measuring the absorption and desorption amount of nitrogen gas per mass. As a measuring device, for example, NOVA-1200 can be used.

In the present description, an average interplanar spacing (002) plane, $d_{002}$, can be measured using a powder X-ray diffraction (XRD) method by a known method (see I. Noda and M. Inagaki, Japan Society for the Promotion of Science, 117th Committee material, 117-71-A-1 (1963), M. Inagaki et al., Japan Society for the Promotion of Science, 117th committee material, 117-121-C-5 (1972), M. Inagaki, "carbon", 1963, No. 36, pages 25-34).

In the present description, an R value is the ratio between the peak intensity $I_D$ of a peak within the range of 1300 to 1400 $cm^{-1}$ and the peak intensity $I_G$ of a peak within the range of 1580 to 1620 $cm^{-1}$ measured by Raman spectroscopy spectra. A larger R value means a lower crystallinity. The R value can be calculated based on a peak intensity near 1360 $cm^{-1}$ and a peak intensity near 1580 $cm^{-1}$ measured with, for example, an NRS3100 manufactured by JASCO Corporation under the following conditions: excitation wavelength: 532 nm, entrance slit width: 200 $\mu$m, exposure time: 15 seconds, integration: twice, diffraction grating: 600 lines/mm.

EXAMPLES

The present invention is specifically described below by way of Examples and Comparative Examples, but the present invention is not limited to the following Examples.

In Examples and Comparative Examples, $D_{50}$, an average interplanar spacing ($d_{002}$) and a specific surface area based on a BET method of the materials used in the Examples and Comparative Examples are measured by the methods described in detail in the "Description of Embodiments" section of this description.

Production of Battery

a) Production of a negative electrode:

To a graphite material, lithium titanate, a conductive assistant, a binder and a solvent were added and mixed while being stirred to thereby obtain a slurry dispersion having enough flowability.

The obtained dispersion was applied to a 20 $\mu$m-thick copper foil to a uniform thickness of 150 $\mu$m using a

doctor blade and was dried with a hot plate and then dried in vacuum at 90°C for 12 hours. The density of the dried electrode was adjusted with roll pressing, to thereby obtain a negative electrode for evaluating batteries.

b) Production of positive electrode:

90.0 g of $LiNi_{1/3}Mn_{1/3}Co_{1/3}O_2$ (manufactured by Umicore, MX7h), 5.0 g of carbon black as a conductive assistant (manufactured by Imerys Graphite & Carbon, SUPER C65) and 5.0 g of polyvinylidene fluoride (PVdF) as a binder were mixed and stirred into N-methylpyrrolidone as appropriate to obtain a slurry dispersion.
The dispersion was applied onto an aluminum foil having a thickness of 20 $\mu$m using a roll coater. After drying, the foil was subjected to roll pressing to obtain a positive electrode for evaluating batteries. The applied amount of the positive electrode was 10 mg/cm$^2$, and the electrode density was 3.4 g/cm$^3$.

c) Preparation of electrolyte:

In a non-aqueous solvent comprising ethylene carbonate (EC) and ethyl methyl carbonate (EMC) at a volume ratio of 3:7, lithium hexafluorophosphate ($LiPF_6$) was dissolved as an electrolyte salt so as to adjust the $LiPF_6$ concentration to 1.0 mol/l. 1 mass% of vinylene carbonate (VC) as an additive was added thereto to obtain an electrolyte.

d) Production of battery:

The negative electrode and the positive electrode were punched to provide a negative electrode piece and a positive electrode piece having an area of 20 cm$^2$, respectively. An Al tab and a Ni tab were attached to the Al foil of the positive electrode piece and the Cu foil of the negative electrode piece, respectively. A microporous film made of polypropylene was sandwiched between the negative electrode piece and the positive electrode piece. The resultant in this state was put into an aluminum laminate packing material in a bag form, and an electrolytic solution was poured into the packing material. After that, an opening was sealed through thermal fusion under reduced pressure at 98% degree of vacuum). Thus, a battery for evaluation (design capacity: 25 mAh) was produced.

Example 1

To 85.0 g of coated artificial graphite ($D_{50}$: 8 $\mu$m, BET specific surface area: 2.3 m$^2$/g), 10.5 g of lithium titanate ($Li_4Ti_5O_{12}$) ($D_{50}$: 8 $\mu$m), 1.5 g of carbon black as a conductive assistant (manufactured by Imerys Graphite & Carbon, SUPER C65) and 3.0 g of polyvinylidene fluoride (PVdF, manufactured by KUREHA CORPORATION, KF Polymer #9300) as a binder were mixed and stirred into N-methylpyrrolidone as appropriate to obtain a slurry dispersion.
Here, the above-mentioned coated artificial graphite was manufactured as below.
Petroleum-based was pulverized to so that $D_{50}$ is adjusted to 6 $\mu$m, and subjected to graphitization at 3000°C to obtain a core material. A powdery isotropic petroleum-based pitch was mixed in an amount of 1 part by mass to 100 parts by mass of the core material by dry blending, and the mixture was heated at 1100°C under an argon atmosphere for 1 hour to obtain a coated artificial graphite.
A negative electrode for evaluating batteries was obtained by using the prepared dispersion. The applied amount of the obtained electrode was 7 mg/cm$^2$, and the electrode density was 1.3 g/cm$^3$.
Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.
As to the cell voltage, a cell in a discharge state after the measurement of the initial discharge capacity was measured using a circuit element resistance meter (manufactured by HIOKI E. E. CORPORATION, m$\Omega$ AC Resistance HiTester 3560).

Example 2

A negative electrode for evaluating batteries was obtained in the same way as in Example 1 except that the coated artificial graphite was changed to uncoated artificial graphite ($D_{50}$: 8 $\mu$m, BET specific surface area: 6.0 m$^2$/g). The applied amount of the obtained electrode was 7 mg/cm$^2$, and the electrode density was 1.3 g/cm$^3$.
Here, the above-mentioned uncoated artificial graphite was obtained by pulverizing petroleum-based pitch so as to adjust $D_{50}$ to 6 $\mu$m and subjecting it to graphitization at 3000°C.
Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Example 3

A negative electrode for evaluating batteries was obtained in the same way as in Example 1 except that carbon black as a conductive assistant was changed to VGCF (trademark, manufactured by SHOWA DENKO K.K., average fiber diameter: 150 nm, average fiber length: 6 $\mu$m) as vapor-grown carbon fiber. The applied amount of the obtained electrode was 7 mg/cm$^2$, and the electrode density was 1.3 g/cm$^3$.
Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Example 4

A negative electrode for evaluating batteries was obtained in the same way as in Example 1 except that coated artificial graphite was changed to another coated artificial graphite ($D_{50}$: 4 $\mu$m, BET specific surface area: 6.7 m$^2$/g). The applied amount of the obtained electrode was 7 mg/cm$^2$, and the electrode density was 1.3 g/cm$^3$.
Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Example 5

A negative electrode for evaluating batteries was obtained in the same way as in Example 1 except that coated artificial graphite was changed to another coated artificial graphite ($D_{50}$: 6 $\mu$m, BET specific surface area: 6.4 m$^2$/g). The applied amount of the obtained electrode was 7 mg/cm$^2$, and the electrode density was 1.3 g/cm$^3$.
Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Example 6

A negative electrode for evaluating batteries was obtained in the same way as in Example 1 except that the blending amount of the coated artificial graphite was changed from 85.0 g to 79.8 g and the blending amount of lithium titanate was changed from 10.5 g to 15.7 g. The applied amount of the obtained electrode was 7 mg/cm$^2$, and the electrode density was 1.3 g/cm$^3$.
Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Example 7

A negative electrode for evaluating batteries was obtained in the same way as in Example 1 except that the blending amount of the coated artificial graphite was changed from 85.0 g to 76.7 g and the blending amount of lithium titanate was changed from 10.5 g to 18.8 g. The applied amount of the obtained electrode was 7 mg/cm$^2$, and the electrode density was 1.3 g/cm$^3$.
Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Example 8

A negative electrode for evaluating batteries was obtained in the same way as in Example 1 except that $D_{50}$ of lithium titanate was changed from 5 $\mu$m to 8 $\mu$m (ENERMIGHT LT-105, manufactured by ISHIHARA SANGYO KAISHA, LTD.). The applied amount of the obtained electrode was 7 mg/cm$^2$, and the electrode density was 1.3 g/cm$^3$.
Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Comparative Example 1

A negative electrode for evaluating batteries was obtained in the same way as in Example 1 except that lithium titanate was not contained and the blending amount of the coated artificial graphite was changed from 85.0 g to 95.5 g. The applied amount of the obtained electrode was 6.5 mg/cm$^2$, and the electrode density was 1.3 g/cm$^3$.
Table 1 shows $D_{50}$, the BET specific surface area, the R value and $d_{002}$ of the artificial graphite, $D_{50}$ of lithium titanate, and the cell voltage.

Comparative Example 2

A negative electrode for evaluating batteries was obtained in the same way as in Example 1 except that the coated artificial graphite was changed to uncoated artificial graphite ($D_{50}$: 10 $\mu$m, BET specific surface area: 2.7 m$^2$/g). The applied amount of the obtained electrode was 7 mg/cm$^2$, and the electrode density was 1.5 g/cm$^3$.

Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Comparative Example 3

A negative electrode for evaluating batteries was obtained in the same way as in Comparative Example 2 except that lithium titanate was not contained and the blending amount of the uncoated artificial graphite was changed from 85.0 g to 95.5 g. The applied amount of the obtained electrode was 6.5 mg/cm$^2$, and the electrode density was 1.5 g/cm$^3$.

Table 1 shows $D_{50}$, the BET specific surface area, the R value and $d_{002}$ of the artificial graphite, $D_{50}$ of lithium titanate, and the cell voltage.

Comparative Example 4

A negative electrode for evaluating batteries was obtained in the same way as in Example 1 except that the coated artificial graphite was changed to uncoated natural graphite ($D_{50}$: 17 $\mu$m, BET specific surface area: 6.5 m$^2$/g). The applied amount of the obtained electrode was 6.5 mg/cm$^2$, and the electrode density was 1.5 g/cm$^3$.

Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Comparative Example 5

A negative electrode for evaluating batteries was obtained in the same way as in Comparative Example 4 except that lithium titanate was not contained and the blending amount of the uncoated artificial graphite was changed from 85.0 g to 95.5 g. The applied amount of the obtained electrode was 6.5 mg/cm$^2$, and the electrode density was 1.5 g/cm$^3$.

Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Comparative Example 6

A negative electrode for evaluating batteries was obtained in the same way as in Example 1 except that the blending amount of the coated artificial graphite was changed from 85.0 g to 94.5 g and the blending amount of lithium titanate was changed from 10.5 g to 1 g. The applied amount of the obtained electrode was 7 mg/cm$^2$, and the electrode density was 1.3 g/cm$^3$.

Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Comparative Example 7

A negative electrode for evaluating batteries was obtained in the same way as in Example 1 except that the blending amount of the coated artificial graphite was changed from 85.0 g to 90.3 g and the blending amount of lithium titanate was changed from 10.5 g to 5.2 g. The applied amount of the obtained electrode was 7 mg/cm$^2$, and the electrode density was 1.3 g/cm$^3$.

Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Comparative Example 8

A negative electrode for evaluating batteries was obtained in the same way as in Example 1 except that the blending amount of the coated artificial graphite was changed from 85.0 g to 73.5 g and the blending amount of lithium titanate was changed from 10.5 g to 22.0 g. The applied amount of the obtained electrode was 7 mg/cm$^2$, and the electrode density was 1.3 g/cm$^3$.

Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Comparative Example 9

A negative electrode for evaluating batteries was obtained in the same way as in Example 1 except that the blending amount of the coated artificial graphite was changed from 85.0 g to 69.3 g and the blending amount of lithium titanate was changed from 10.5 g to 26.2 g. The applied amount of the obtained electrode was 7 mg/cm$^2$, and the electrode density was 1.3 g/cm$^3$.

Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Comparative Example 10

A negative electrode for evaluating batteries was obtained in the same way as in Example 1 except that the particle diameter of lithium titanate was changed from 5 $\mu$m to 13 $\mu$m. The applied amount of the obtained electrode was 7 mg/cm$^2$, and the electrode density was 1.3 g/cm$^3$.

Table 1 shows $D_{50}$, the BET specific surface area, the R value and $d_{002}$ of the artificial graphite, $D_{50}$ of lithium titanate, the ratio of the lithium titanate in the total mass of the artificial graphite and the lithium titanate, and the cell voltage.

Table 1

| | Artificial graphite | | | | LTO | LTO ratio (%) | Cell voltage (V) |
|---|---|---|---|---|---|---|---|
| | $D_{50}$ ($\mu$m) | BET (m$^2$/g) | R value | $d_{002}$ (nm) | $D_{50}$ ($\mu$m) | | |
| Example 1 | 8 | 2.3 | 0.20 | 0.3363 | 5 | 11.0 | 2.983 |
| Example 2 | 8 | 6.0 | 0.19 | 0.3365 | 5 | 11.0 | 2.994 |
| Example 3 | 8 | 2.3 | 0.20 | 0.3363 | 5 | 11.0 | 2.979 |
| Example 4 | 4 | 6.7 | 0.19 | 0.3364 | 5 | 11.0 | 2.993 |
| Example 5 | 6 | 6.4 | 0.19 | 0.3364 | 5 | 11.0 | 2.993 |
| Example 6 | 8 | 2.3 | 0.20 | 0.3363 | 5 | 16.4 | 2.900 |
| Example 7 | 8 | 2.3 | 0.20 | 0.3363 | 5 | 19.7 | 2.859 |
| Example 8 | 8 | 2.3 | 0.20 | 0.3363 | 8 | 11.0 | 2.983 |
| Comparative Example 1 | 8 | 2.3 | 0.20 | 0.3363 | - | 0.0 | 3.039 |
| Comparative Example 2 | 10 | 2.7 | 0.17 | 0.3367 | 5 | 11.0 | 2.997 |
| Comparative Example 3 | 10 | 2.7 | 0.17 | 0.3367 | - | 0.0 | 3.059 |
| Comparative Example 4 | 17 | 6.5 | 0.07 | 0.3356 | 5 | 11.0 | 2.977 |
| Comparative Example 5 | 17 | 6.5 | 0.07 | 0.3356 | - | 0.0 | 3.016 |
| Comparative Example 6 | 8 | 2.3 | 0.20 | 0.3363 | 5 | 1.0 | 3.033 |
| Comparative Example 7 | 8 | 2.3 | 0.20 | 0.3363 | 5 | 5.4 | 3.001 |
| Comparative Example 8 | 8 | 2.3 | 0.20 | 0.3363 | 5 | 23.0 | 2.803 |
| Comparative Example 9 | 8 | 2.3 | 0.20 | 0.3363 | 5 | 27.4 | 2.743 |
| Comparative Example 10 | 8 | 2.3 | 0.20 | 0.3363 | 13 | 11.0 | 3.000 |
| * LTO: lithium titanate | | | | | | | |

Physical property test of secondary battery

(1) Determination of C rate

The cell was charged in constant-current (CC) and constant-voltage (CV) mode at 5 mA with an upper limit voltage of 4.2 V and a cut off current of 1.25 mA and subjected to degassing in a charged state. Subsequently discharging was performed in the CC mode at a current of 5 mA with a lower limit voltage of 2.8 V. The discharge capacity at the second cycle was taken as a cell capacity to thereby determine the C rate. 1 C was found to be 25 mA.

(2) Test of charge-discharge rate (measurement at 25°C)

The cell was charged in constant-current (CC) and constant-voltage (CV) mode at 5 mA with an upper limit voltage of 4.2 V and a cut off current of 1.25 mA. Subsequently discharging was performed in the CC mode at a current of 5 C (around 125 mA) with a lower limit voltage of 2.8 V. The ratio (%) of the discharge capacity at 5 C to the discharge capacity at 0.2 C (around 5 mA) was calculated.

```
(Discharge capacity at 5 C (%))
    =(Discharge capacity at 5 C (mAh))/(Discharge capacity at
    0.2 C (mAh))x100
```

In addition, after the cell was discharged in the CC mode at a current of 5 mA with a minimum voltage of 2.8 V, the cell was charged in CC mode at 5 C with a maximum voltage of 4.2 V, and the ratio (%) of the charge capacity at 5 C to the charge capacity at 0.2 C (around 5 mA) was calculated.

```
(Charge capacity at 5 C (%))
=(Charge capacity at 5 C (mAh))/(Charge capacity at 0.2 C
(mAh))x100
```

Table 2 shows the results.

Table 2

|  | Charge capacity (%) | Discharge capacity (%) |
|---|---|---|
| Example 1 | 91.2 | 93.5 |
| Example 2 | 92.6 | 95.1 |
| Example 3 | 95.6 | 98.1 |
| Example 4 | 95.4 | 98.4 |
| Example 5 | 94.6 | 97.8 |
| Example 6 | 92.4 | 94.0 |
| Example 7 | 92.6 | 94.2 |
| Example 8 | 91.6 | 93.1 |
| Comparative Example 1 | 88.4 | 90.4 |
| Comparative Example 2 | 85.7 | 86.9 |
| Comparative Example 3 | 83.9 | 85.9 |
| Comparative Example 4 | 80.2 | 82.0 |
| Comparative Example 5 | 79.5 | 80.3 |

(continued)

|  | Charge capacity (%) | Discharge capacity (%) |
|---|---|---|
| Comparative Example 6 | 88.7 | 90.6 |
| Comparative Example 7 | 91.2 | 91.5 |
| Comparative Example 8 | 92.0 | 92.8 |
| Comparative Example 9 | 92.1 | 93.0 |
| Comparative Example 10 | 88.0 | 89.0 |

(3) Test of charge-discharge rate (measurement at -20°C)

The cell was fully charged at 25°C in constant-current (CC) and constant-voltage (CV) mode at 5 mA with an upper limit voltage of 4.2 V and a cut off current of 1.25 mA. Subsequently the cell was left to stand in -20°C atmosphere for 8 hours, and discharging was performed in the CC mode with a lower limit voltage of 2.8 V at each current of 0.2 C, 0.5 C, and 1 C. The ratio (%) of the discharge capacity at each current of to the discharge capacity at 0.2 C at 25°C was calculated and used as an index of the discharge characteristics at a low temperature.

In addition, after the cell was fully discharged at 25°C in the CC mode at a current of 5 mA with a minimum voltage of 2.8 V, the cell was left to stand in -20°C atmosphere for 8 hours and was charged in CC mode at each current of 0.2 C, 0.5 C and 1 C with a maximum voltage of 4.2 V. The ratio (%) of the charge capacity at each current to the charge capacity at 0.2 C at 25°C was calculated and used as an index of the charge characteristics at a low temperature.

Table 3 shows the results.

Table 3

|  | Charge capacity (%) | | | Discharge capacity (%) | | |
|---|---|---|---|---|---|---|
|  | 0.2 C | 0.5 C | 1 C | 0.2 C | 0.5 C | 1 C |
| Example 1 | 92.2 | 85.5 | 63.5 | 90.2 | 82.5 | 71.5 |
| Example 2 | 92.6 | 85.3 | 64.1 | 91.0 | 83.2 | 73.1 |
| Example 3 | 93.8 | 86.1 | 68.1 | 91.0 | 83.9 | 75.1 |
| Example 4 | 94.6 | 87.6 | 70.1 | 91.5 | 84.9 | 76.1 |
| Example 5 | 92.7 | 86.6 | 69.1 | 91.1 | 84.1 | 75.6 |
| Example 6 | 93.1 | 86.0 | 64.6 | 91.0 | 83.1 | 72.6 |
| Example 7 | 93.3 | 86.1 | 64.9 | 91.3 | 82.9 | 72.9 |
| Example 8 | 91.2 | 85.0 | 63.0 | 90.0 | 82.1 | 71.1 |
| Comparative Example 1 | 90.2 | 83.1 | 61.2 | 80.1 | 72.4 | 63.4 |
| Comparative Example 2 | 82.7 | 79.5 | 60.9 | 78.9 | 65.9 | - |
| Comparative Example 3 | 78.5 | 72.9 | 56.3 | 77.3 | 60.4 | - |
| Comparative Example 4 | 83.9 | 80.8 | 61.5 | 80.1 | 75.1 | 45.0 |
| Comparative Example 5 | 82.5 | 79.0 | 59.4 | 79.4 | 74.0 | 43.1 |
| Comparative Example 6 | 91.0 | 83.6 | 61.1 | 80.9 | 72.8 | 63.8 |
| Comparative Example 7 | 91.3 | 84.9 | 62.7 | 82.9 | 73.8 | 64.8 |
| Comparative Example 8 | 92.2 | 85.4 | 63.8 | 90.1 | 81.9 | 70.8 |
| Comparative Example 9 | 92.3 | 85.9 | 63.7 | 90.0 | 81.2 | 71.8 |
| Comparative Example 10 | 92.1 | 85.6 | 63.4 | 80.4 | 72.3 | 63.5 |

(4) Measurement of cycle characteristics (Evaluation of cycle characteristics at 45°C)

The cell was charged in constant-current (CC) and constant-voltage (CV) mode at 2 C (around 50 mA) with an upper limit voltage of 4.2 V and a cut off current of 1.25 mA.

Subsequently discharging was performed in the CC mode with a lower limit voltage of 2.8 V at 2 C.

The charge/discharge was repeated 100 cycles under the above-mentioned conditions. The ratio (%) of the discharge capacity at 100th cycle to the initial discharge capacity was calculated and defined as the discharge capacity retention rate.

```
(Discharge capacity retention rate after 100 cycles (%))

=(Discharge capacity at 100th cycle)/(Initial discharge

capacity)x100
```

Table 4 shows the results.

Table 4

|  | Capacity retention rate (%) |
|---|---|
| Example 1 | 89.6 |
| Example 2 | 91.1 |
| Example 3 | 94.2 |
| Example 4 | 88.9 |
| Example 5 | 89.9 |
| Example 6 | 90.6 |
| Example 7 | 90.2 |
| Example 8 | 89.0 |
| Comparative Example 1 | 78.4 |
| Comparative Example 2 | 91.9 |
| Comparative Example 3 | 89.5 |
| Comparative Example 4 | 82.2 |
| Comparative Example 5 | 78.5 |
| Comparative Example 6 | 78.7 |
| Comparative Example 7 | 81.0 |
| Comparative Example 8 | 90.2 |
| Comparative Example 9 | 91.0 |
| Comparative Example 10 | 79.4 |

(5) Measurement of cycle characteristics (Evaluation of cycle characteristics at -20°C)

The cell was left to stand in -20°C atmosphere for 8 hours and charged in constant-current (CC) and constant-voltage (CV) mode at 0.5 C (around 25 mA) with an upper limit voltage of 4.2 V and a cut off current of 1.25 mA.

Subsequently discharging was performed in the CC mode with a lower limit voltage of 2.8 V at 0.5 C.

The charge/discharge was repeated 50 cycles under the above-mentioned conditions. The ratio (%) of the discharge capacity at 50th cycle to the initial discharge capacity was calculated and defined as the discharge capacity retention rate.

$$\text{(Discharge capacity retention rate after 50 cycles (\%))}$$
$$= \text{(Discharge capacity at 50}^{th}\text{ cycle)/(Initial discharge}$$
$$\text{capacity)} \times 100$$

Table 5 shows the results.

Table 5

|  | Capacity retention rate (%) |
|---|---|
| Example 1 | 89.1 |
| Example 2 | 90.0 |
| Example 3 | 90.2 |
| Example 4 | 90.3 |
| Example 5 | 89.9 |
| Example 6 | 90.0 |
| Example 7 | 90.3 |
| Example 8 | 89.1 |
| Comparative Example 1 | 70.4 |
| Comparative Example 2 | 70.0 |
| Comparative Example 3 | 65.9 |
| Comparative Example 4 | 71.2 |
| Comparative Example 5 | 68.5 |
| Comparative Example 6 | 70.7 |
| Comparative Example 7 | 73.2 |
| Comparative Example 8 | 90.5 |
| Comparative Example 9 | 91.0 |
| Comparative Example 10 | 72.4 |

## Claims

1. A negative electrode for a lithium ion secondary battery, including: a current collector; and a negative electrode active material layer including a negative electrode active material, a conductive assistant, and a binder, wherein the negative electrode active material includes:

   artificial graphite having a 50% particle diameter $D_{50}$ in a cumulative particle size distribution on a volume basis of from 1 $\mu$m to 9 $\mu$m; and lithium titanate having a 50% particle diameter $D_{50}$ in a cumulative particle size distribution on a volume basis of from 1 $\mu$m to 9 $\mu$m, and wherein the negative electrode active material has a ratio of the lithium titanate in a total mass of the artificial graphite and the lithium titanate of from 10.0 mass% to 20.0 mass%.

2. The negative electrode for a lithium ion secondary battery according to claim 1, wherein an amount of the conductive assistant is from 1.0 part by mass to 2.0 parts by mass with respect to 100 parts by mass of a total of the artificial graphite and the lithium titanate.

3. The negative electrode for a lithium ion secondary battery according to claim 2, wherein an amount of the binder is from 3.0 parts by mass to 6.0 parts by mass with respect to 100 parts by mass of a total of the artificial graphite, the lithium titanate, and the conductive assistant.

4. The negative electrode for a lithium ion secondary battery according to any one of claims 1 to 3, wherein the artificial graphite has an average interlayer spacing d002 of a (002) plane determined by X-ray diffractometry of from 0.3360 nm to 0.3370 nm.

5. The negative electrode for a lithium ion secondary battery according to any one of claims 1 to 4, wherein the artificial graphite includes particles each including an artificial graphite core particle and a carbon coating layer formed on a surface of the artificial graphite core particle.

6. The negative electrode for a lithium ion secondary battery according to any one of claims 1 to 5, wherein the artificial graphite has an intensity ratio $I_D/I_G$ (R value) between a peak intensity $I_D$ in a region of from 1,300 cm$^{-1}$ to 1,400 cm$^{-1}$ in a spectrum measured by Raman spectroscopy and a peak intensity $I_G$ in a region of from 1,580 cm$^{-1}$ to 1,620 cm$^{-1}$ in the spectrum of from 0.10 to 0.25.

7. The negative electrode for a lithium ion secondary battery according to any one of claims 1 to 6, wherein the artificial graphite has a BET specific surface area of from 1.0 m$^2$/g to 7.0 m$^2$/g.

8. The negative electrode for a lithium ion secondary battery according to any one of claims 1 to 7, wherein the conductive assistant includes at least one kind selected from the group consisting of carbon black, a vapor grown carbon fiber, and a carbon nanotube.

9. A lithium ion secondary battery, comprising the negative electrode for a lithium ion secondary battery of any one of claims 1 to 8.

## INTERNATIONAL SEARCH REPORT

| International application No. |
|---|
| PCT/JP2017/020822 |

| A. CLASSIFICATION OF SUBJECT MATTER |
|---|
| *H01M4/133*(2010.01)i, *H01M4/36*(2006.01)i, *H01M4/485*(2010.01)i, *H01M4/587* (2010.01)i, *H01M4/62*(2006.01)i |

According to International Patent Classification (IPC) or to both national classification and IPC

| B. FIELDS SEARCHED |
|---|
| Minimum documentation searched (classification system followed by classification symbols) H01M4/133, H01M4/36, H01M4/485, H01M4/587, H01M4/62 |

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-46218 A (Panasonic Corp.), 12 March 2015 (12.03.2015), & WO 2013/099279 A1 | 1-9 |
| A | JP 2006-66298 A (Toyota Motor Corp.), 09 March 2006 (09.03.2006), (Family: none) | 1-9 |
| A | JP 2001-216962 A (Toyota Central Research and Development Laboratories, Inc.), 10 August 2001 (10.08.2001), (Family: none) | 1-9 |
| A | WO 2012/001840 A1 (Panasonic Corp.), 05 January 2012 (05.01.2012), & JP 5073105 B2     & US 2012/0164530 A1 & CN 102484244 A | 1-9 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 July 2017 (05.07.17) | 18 July 2017 (18.07.17) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

17

**INTERNATIONAL SEARCH REPORT**

International application No.

PCT/JP2017/020822

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2016-54284 A  (JSR Corp., JM Energy Corp.), 14 April 2016 (14.04.2016), & US 2016/0060125 A1 | 1-9 |
| A | JP 2004-71580 A  (Osaka Gas Co., Ltd., Sharp Corp.), 04 March 2004 (04.03.2004), & JP 11-310405 A        & JP 11-343108 A & JP 2002-348109 A       & US 2004/0151837 A1 & WO 1997/018160 A1      & EP 861804 A1 & CN 1202142 A | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010020912 A
- JP 2000348725 A
- JP 2015046218 A
- JP 2013058495 A

- US 20100015524 A1
- JP 60054998 A
- JP 2778434 B

**Non-patent literature cited in the description**

- **I. NODA ; M. INAGAKI.** *Japan Society for the Promotion of Science, 117th Committee material,* 1963, 117-71, A-1

- **M. INAGAKI et al.** *Japan Society for the Promotion of Science, 117th committee material,* 1972, 117-121, C-5
- **M. INAGAKI.** *carbon,* 1963, vol. 36, 25-34